# EUROPEAN PATENT SPECIFICATION

(11) **EP 3 437 956 B1**
(45) Date of publication and mention of the grant of the patent: **26.02.2025**
(21) Application number: 17773490.2
(22) Date of filing: 13.01.2017
(51) Int. Cl.: B61L 27/16, B61L 15/00, B60L 15/40, B61L 25/04, G06N 7/00, G08G 1/01, G08G 1/13

(54) **DATA INTEGRATION AND ANALYSIS SYSTEM**
DATENINTEGRATIONS- UND ANALYSESYSTEM
SYSTÈME D'INTÉGRATION ET D'ANALYSE DE DONNÉES

(30) Priority: 31.03.2016 JP 2016069941
(43) Date of publication of application: 06.02.2019
(73) Proprietor: Hitachi, Ltd., Tokyo 100-8280 (JP)
(72) Inventor: FURUTANI, Ryo, Tokyo 100-8280 (JP)
(74) Representative: Mewburn Ellis LLP
(86) International application number: PCT/JP2017/000912
(87) International publication number: WO 2017/168940

(56) References cited:
- EP-A1- 2 442 288
- CN-B- 1 906 074
- GB-A- 2 491 291
- JP-A- 2002 109 690
- JP-A- 2006 088 821
- JP-A- 2011 201 336
- JP-A- 2013 213 692
- US-A1- 2010 094 798
- US-A1- 2017 080 963
- US-B2- 9 274 869
- US-B2- 9 975 563

## Description

### Technical Field

The technical field of the present invention relates to data integration and analysis systems for railway vehicles.

### Background Art

The background art of a technology field regarding the present invention is disclosed by JP A 2011-201336. This publication cites the following as a problem: "Although status data regarding plural devices in a vehicle is compared, the data is separated into position factor components and device factor components, and abnormalities are detected, only data obtained from one vehicle is utilized, and data obtained from other vehicles is not utilized in this case. In addition, in a technique is utilized in which the moving status values of the vehicle are stored and managed while being sorted in small sections, each moving status value is judged to be abnormal or not in comparison with the past information regarding the corresponding section, therefore the past information. Nevertheless, there is a fear that it may successively become necessary to communicate with the ground, so that if the moving status values of vehicles are transmitted to the ground via wireless communication, the transmission capacity, cost, and reliability required for the communication inevitably become unaffordable burdens, and if the raw data of the moving status values is stored, vast amounts of storage capacities become necessary. Furthermore, in the above system, it is impossible to detect an abnormality if status data (sensor outputs) at the time of failure does not include any sign of abnormality. On the contrary, it sometimes happens that although an abnormality detection condition is satisfied because status data shows any data change before a failure occurs, the status data goes back to normality afterward, so that the judgment of the abnormality detection becomes an erroneous judgment. In any case, status data in the future is not obtained from a moving body at the time a failure occurs, and it is also difficult to prepare status data adequate enough to predict status data in the future from the moving body. As mentioned above, even in the case where a minor failure occurs, a crewman on the moving body cannot judge whether the minor failure leads to an abnormality or not all by himself/herself, so that there are many cases where the crewman stops the moving body. Therefore, the moving body is unnecessarily stopped due to abnormality judgment made by an erroneous detection, which leads to the decrease of the operation rate of the moving body. In particular, in the case where the moving body is a train, the unnecessary stoppage of the train brings about the decrease of the service quality. Therefore, it is conceivable that, if an advanced support, such as information obtained by a ground system after the ground system refers to examples of the past, at the time a failure occurs can be provided, an abnormality judgment whether the failure will lead to an abnormality or not can be accurately made. To put it differently, how to realize such an advanced support remains as a problem to be solved. In the present invention, in order to cope with the above problem, an advanced support is made in such a way that the status data of a moving body is transmitted to the ground in the case of a failure occurrence, and a possibility that the failure leads to an abnormality is appropriately predicted through the reference to the case examples of the past and the like performed by the ground, so that a probability that an erroneous detection makes the moving body stop is decreased, and the improvement of the operation rate of the moving body can be expected."

(Refer to the paragraphs [0006], [0007], and [0008] of JP A 2011-201336). And as a solution means for the above problem, the following and the like are disclosed:
"A moving body including: a measurement apparatus that measures the statuses of various devices included in the moving body; a status monitoring apparatus that detects the occurrence of a failure using the status data of the various devices measured by the measurement apparatus; and a communication apparatus that transmits the type of the currently-happening failure and the status data of the various devices before and after the occurrence of the failure to the ground system, and receives an abnormality judgment result from the ground system, wherein the ground system includes: a communication apparatus that transmits data to the moving body and receives data from the moving body; an accumulation unit that accumulates the types of failures and the status data in the past about the moving body; and an abnormality diagnosis unit that analyzes the status data of failures in the past and at the same time outputs an abnormality diagnosis result obtained by judging whether the relevant failure is an abnormality or not, and the ground system further includes: an abnormality analysis database that stores the types of failures, abnormality diagnosis results, and status data in the past while they are associated with one another; and an abnormality occurrence prediction unit that outputs an abnormality judgment result by comparing the type of failure transmitted from the moving body at the time the failure occurs and status data before and after the failure with the types of failures and status data in the past that are stored in the abnormality analysis database, and the communication apparatus of the ground system transmits the abnormality judgment result to the moving body (Refer to the paragraph [0009] of JP A 2011-201336).

### Citation List

### Patent Literature

JP A 2011-201336 is discussed above. EP A 2442288 proposes a device abnormality monitoring method and system.

### Summary of Invention

### Technical Problem

Nevertheless, in the prior art described in JP A 2011-201336, no method is disclosed for easily and in a short time extracting highly effective improvement measures and policies for all moving bodies or specified moving bodies, and performing feedback to a moving body for which the improvement measures are necessary.

Document EP 2 442 288 A1 discloses an apparatus abnormality monitoring method based on a meta prediction model. The apparatus can be an energy conversion apparatus which converts fuel to at least kinetic energy.

### Solution to Problem

In order to solve the above problem, the present invention provides a system for integrating and analyzing data according to claim 1. Advantageous Effects of Invention

According to the abovementioned measures, it becomes possible that highly effective improvement measures for all railway vehicles or specified railway vehicles are extracted easily and in a short time, and by feeding back these improvement measures to moving bodies for which these improvement measures are necessary, the performances of the target railway vehicles can be improved.

### Brief Description of Drawings

Fig. 1 is a configuration example of the entirety of a data integration and analysis system for railway vehicles according to a first embodiment.
Fig 2 is an example of the system configuration of a vehicle data analysis processing unit shown in Fig. 1.
Fig. 3 is an example of the system configuration of a data central analysis apparatus shown in Fig. 1.
Fig. 4 is an example of an analysis flow of the data integration and analysis system for railway vehicles shown in Fig. 1.
Fig. 5 is an example of analysis processing of a vehicle data analysis processing unit shown in Fig. 2.
Fig. 6 is an example of an analysis processing result of a vehicle data analysis processing unit shown in Fig. 2.
Fig. 7 is an example of a selection method of explanatory index candidates performed by a data central analysis apparatus shown in Fig. 3.
Fig. 8 is an example of a selection method of the priorities of explanatory indexes using the explanatory index candidates shown in Fig. 7.

### Description of Embodiments

A data integration and analysis system the object of which is to save the consumption energy of a railway vehicle will be explained as an embodiment with reference to the accompanying drawings. In addition, the object of data analysis is not limited to the energy saving of a railway vehicle but the object can be set to the improvement of comfort such as the ride quality of the moving body, or the improvement of the reliability for decreasing the failures of the devices of the moving body can be set to the object of the data analysis, or an index including a combination of the above improvements can be set to the object. Furthermore, through all the drawings, components that have common functions are given the same reference, and redundant explanations about the components will be omitted.

### First Embodiment

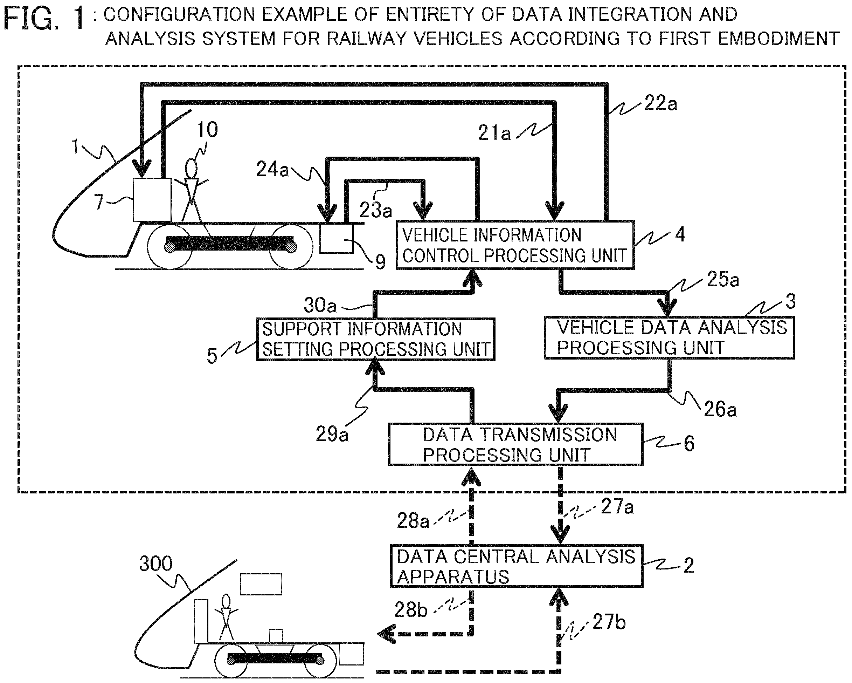

First, a configuration example of the entirety of a system according to a first embodiment will be explained with reference to Fig. 1. Fig. 1 shows that the system according to the first embodiment includes a railway vehicle 1 and a data central analysis apparatus 2 as the entirety of a data integration and analysis system for a railway vehicle. The railway vehicle 1 includes: a driver 10; a control platform 7; a device control apparatus 9 for controlling devices such as the doors, toilets, brakes, and the like of the railway vehicle 1; a vehicle information control processing unit 4; a vehicle data analysis processing unit 3; a support information setting processing unit 5; and a data transmission processing unit 6. Here, it is conceivable that the vehicle information control processing unit 4, the vehicle data analysis processing unit 3, and the support information setting processing unit 5 are mounted on a certain device of the railway vehicle 1 or on an independent device, and the device containing these units is disposed in a device room or in an underfloor space of a specified vehicle of the railway vehicle 1.

Next, the flows of signals between the respective apparatuses and the respective processing units will be explained. First, the vehicle information control processing unit 4 receives signals 21a such as a vehicle driving command signal from the control platform 7, signals 23a such as a device status monitoring signal from the device control apparatus 9, and support information 30a from the support information setting processing unit 5, and outputs signals 22a such as a vehicle driving support signal to the control platform 7, signals 24a such as a device status changing parameter signal to the device control apparatus 9, and a vehicle status monitoring signal 25a to the vehicle data analysis processing unit 3. The vehicle data analysis processing unit 3 receives the vehicle status monitoring signal 25a from the vehicle information control processing unit 4, and outputs a vehicle data analysis result 26a to the data transmission processing unit 6. The support information setting processing unit 5 receives support condition information 29a from the data transmission processing unit 6, and outputs support information 30a to the vehicle information control processing unit 4. The data transmission processing unit 6 transmits the vehicle data analysis result 26a input from the vehicle data analysis processing unit 3 to the data central analysis apparatus 2 by wireless as a vehicle data analysis result 27a, and outputs support condition information 28a received from the data central analysis apparatus 2 by wireless to the support information setting processing unit 5 as the support condition information 29a. The data central analysis apparatus 2 receives the vehicle data analysis result 27a transmitted from the data transmission processing unit 6 of the railway vehicle 1 by wireless, and outputs the support condition information 28a to the data transmission processing unit 6 of the railway vehicle 1. Furthermore, the data central analysis apparatus 2 is a system configured to perform not only the data transmission of the support condition information 28a and the vehicle data analysis result 27a with the railway vehicle 1 but also configured to perform the data transmission of support condition information 28b and a vehicle data analysis result 29b with another railway vehicle 300.

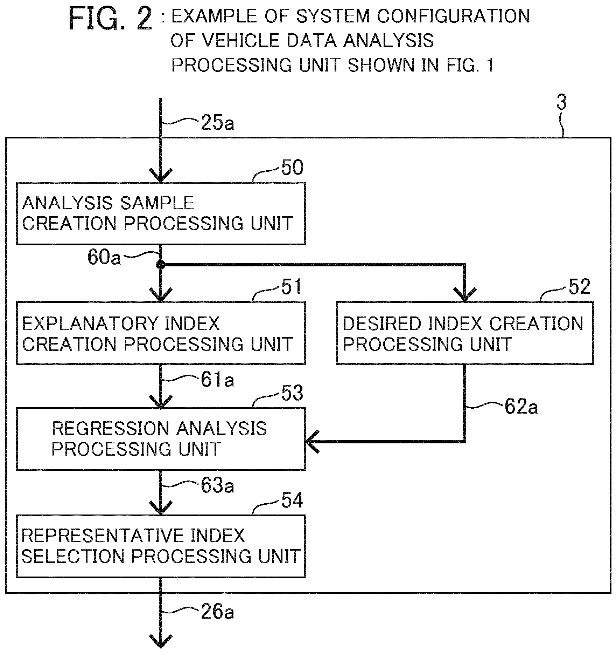

Next, the system configuration of the vehicle data analysis processing unit will be explained with reference to Fig. 2. The vehicle data analysis processing unit 3 includes: an analysis sample creation processing unit 50; an explanatory index creation processing unit 51; a desired index creation processing unit 52; a regression analysis processing unit 53; and a representative index selection processing unit 54. In the vehicle data analysis processing unit 3, the vehicle status monitoring signal 25a output from the vehicle information processing unit 4 is input into the analysis sample creation processing unit 50, and the analysis sample creation processing unit 50 outputs the time history signal 60a of the vehicle status monitoring signal sampled for data analysis to the explanatory index creation processing unit 51 and the desired index creation processing unit 52. The explanatory index creation processing unit 51 creates explanatory indexes used for regression analysis from the time history signal 60a of the input vehicle status monitoring signal, and outputs an explanatory index signal 61a to the regression analysis processing unit 53. The desired index creation processing unit 52 creates desired indexes used for the regression analysis from the time history signal 60a of the input vehicle status monitoring signal, and transmits a desired index signal 62a to the regression analysis processing unit 53. The regression analysis processing unit 53 performs the regression analysis using the input the explanatory index signal 61a and the input the desired index signal 62a, and outputs a regression analysis result 63a to the representative index selection processing unit 54. The representative index selection processing unit 54 receives the regression analysis result 63a, and outputs the vehicle data analysis result 26a to the data transmission processing unit 6. An example of the processing contents of the vehicle data analysis processing unit will be explained in detail later.

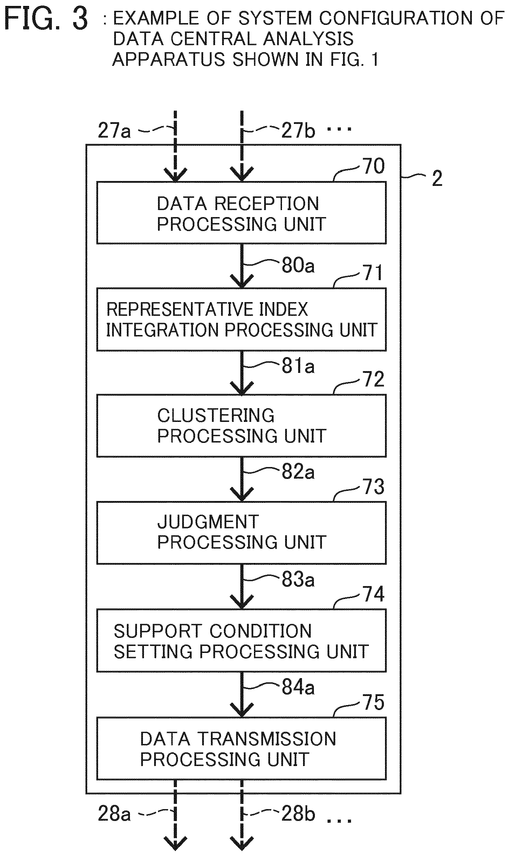

Next, the system configuration of the data central analysis apparatus will be explained with reference to Fig. 3. The data central analysis apparatus 2 includes: a data reception processing unit 70; a representative index integration processing unit 71; a clustering processing unit 72; a judgment processing unit 73; a support condition setting processing unit 74; and data transmission processing unit 75. In the data central analysis apparatus 2, data analysis results 27a, 27b, ··· , 27n of respective railway vehicles output from data transmission processing units 6 are input into the data reception processing unit 70, and the vehicle data analysis results 80a of the respective railway vehicles are output to the representative index integration processing unit 71. The representative index integration processing unit 71 receives the vehicle data analysis results 80a of the respective railway vehicles, and outputs an integration index result 81a to the clustering processing unit 72. The clustering processing unit 72 receives the integration processing result 81a, outputs a clustering processing result 82a to the judgment processing unit 73. The judgment processing unit 73 receives the clustering processing result 82a, and outputs a judgment result 83a to the support condition setting processing unit 74. The support condition setting processing unit 74 receives the judgment result 83a, and outputs support condition information 84a to the data transmission processing unit 75. The data transmission processing unit 75 receives the support condition information 84a, and outputs pieces of the support condition information 28a, 28b, ··· , 28n to the data transmission processing units 6 of the respective vehicles that need the support condition information 84a. An example of the processing contents of the data central analysis apparatus 2 will be explained in detail later. Here, the data central analysis apparatus 2 can be installed on any of an operation command office, a maintenance base, and the like on the ground. Alternatively, the data central analysis apparatus 2 can be installed on a representative vehicle of the plural railway vehicles.

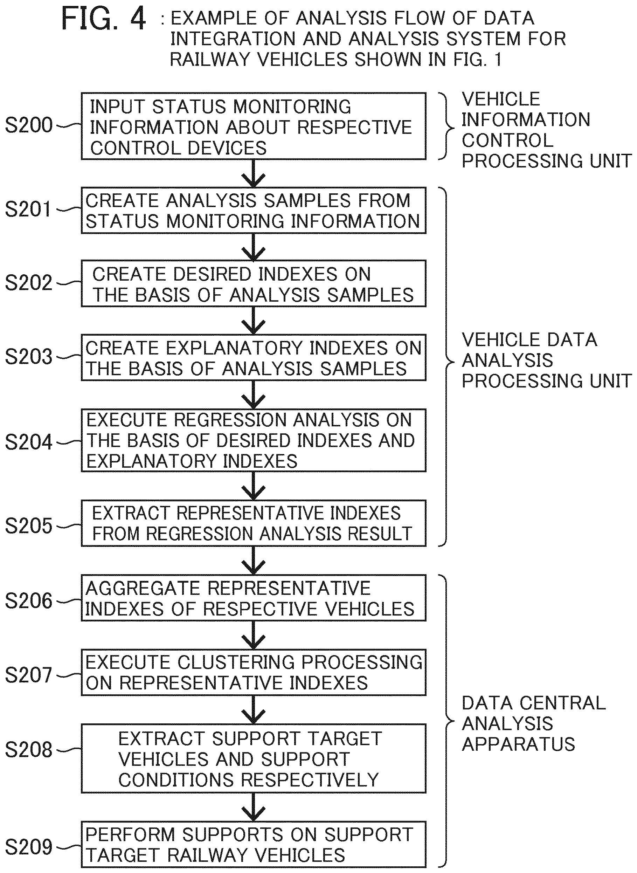

Next, the analysis flow of the data integration and analysis system will be explained with reference to Fig. 4. First, the vehicle information control processing unit 4 receives status monitoring information about respective control devices mounted on the railway vehicle 1 (at step S200) . Next, the analysis sample creation processing unit 50 in the vehicle data analysis processing unit creates analysis samples based on vehicle velocity information about the velocity of the railway vehicle, position signals such as station information about a station where the vehicle is located, and time information included in this status monitoring information (at step S201). For example, the analysis sample creation processing unit 50 creates status monitoring information regarding the vehicle between any two adjacent stations as one analysis sample using the velocity of the railway vehicle and the station information. Next, the desired index creation processing unit 52 in the vehicle data analysis processing unit creates desired indexes on the basis of the analysis samples (at step S202). For example, the consumed electric energy of the driving system or the auxiliary machine of the vehicle between any two adjacent stations as one analysis sample is set to one desired index. Here, in the case where traveling distances regarding plural combinations of two adjacent stations are different from one another, it is recommended that a value obtained by dividing every consumed electric energy by the relevant traveling distance is set to a desired index, that is, every consumed electric energy is normalized by the relevant traveling distance. Next, in the explanatory index creation processing unit 51 in the vehicle data analysis processing unit, explanatory indexes are created on the basis of the analysis samples (at step S203). For example, as one analysis sample, the operation ratio showing each piece of status monitoring information regarding any two adjacent stations (that is, in the case of taking the traveling velocity of the vehicle as an example, the time ratio showing a probability that the operation traveling velocity falls within 0 and 25 %, within 25 and 50 %, within 50 and 75 %, or within 75 and 100 % relative to the maximum operation traveling velocity 100 %) is calculated, and this operation ratio is set to one explanatory index. Here, in the case where traveling times regarding plural combinations of two adjacent stations are different from one another, it is recommended that a value obtained by dividing every operation ratio by the relevant traveling time is set to an explanatory index, that is, every explanatory index is normalized by the relevant traveling time. Next, in the regression analysis processing unit 53 in the vehicle data analysis processing unit, regression analysis is performed on the basis of the desired indexes and the explanatory indexes (at step S204). Next, in the representative index selection processing unit 54 in the vehicle data analysis processing unit, explanatory indexes that become representative indexes and have high correlations with desired indexes are extracted (at step S205) . For example, explanatory indexes that have high correlations with consumed electric energies that are desired indexes are extracted using correlation relations, and the correlation coefficients and regression coefficients (absolute values) are recorded as sets respectively, and a predefined number of top explanatory indexes are listed as representative indexes. Next, the data reception processing unit 70 in the data central analysis apparatus 2 receives the representative indexes of the respective railway vehicles, and the representative index integration processing unit 71 aggregates the received representative indexes of the respective railway vehicles (at step S206). Next, the clustering processing unit 72 in the data central analysis apparatus 2 performs clustering processing for calculating reference values used for the judgment of the tendencies of the representative indexes of the respective railway vehicles from the aggregated representative indexes (the clustering processing is, for example, processing in which the correlation coefficients and regression coefficients of the respective explanatory indexes with desired variables are prepared in advance, the correlation coefficients and regression coefficients of the respective explanatory indexes A, B, C, and so on are plotted on the correlation coefficient axis and regression axis, and the representative indexes are classified into subsets based on the respective explanatory variables A, B, C, and so on (at step S207). Next, the support condition setting processing unit 74 in the data central analysis apparatus 2 extracts railway vehicles and the support conditions for the railway vehicles respectively on the basis of the clustering processing result (at step S208). For example, the explanatory index A is applied to all railway vehicles A, ··· , N that are data analysis targets. Alternately, a support condition that the explanatory index B is applied to only railway vehicles A, B, and C that are data analysis targets is calculated. Next, in the support information setting processing unit, etc. of each railway vehicle that is a support target, the relevant support is performed on each railway vehicle itself (at step S209).

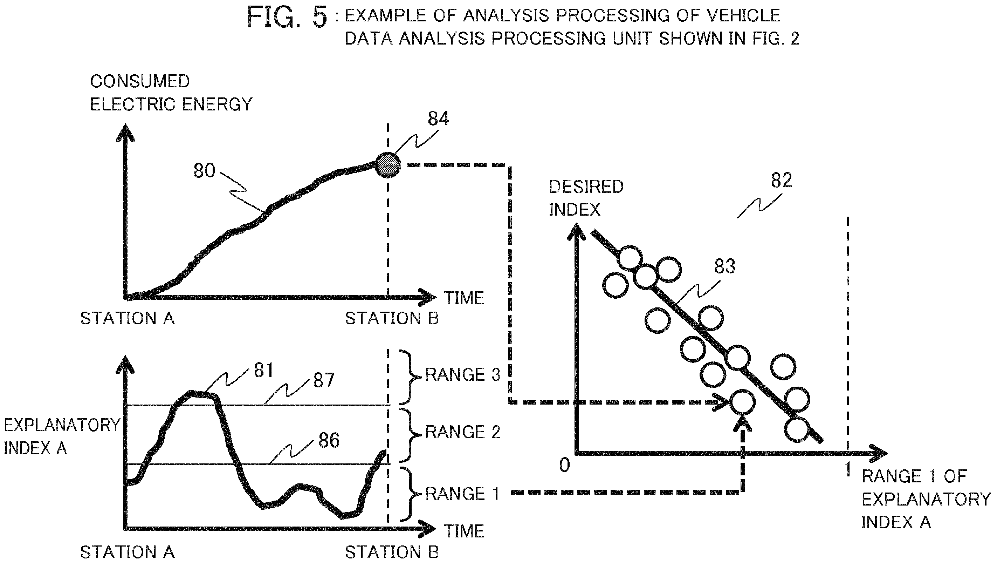

Next, an example of analysis processing performed by the vehicle data analysis processing unit will be explained with reference to Fig. 5. Fig. 5 shows the time history waveforms of a consumed electric energy 80, which is a desired index, and an explanatory index A 81 between a station A and a station B, and the consumed electric energy 80 is successively accumulated while the railway vehicle is traveling between the station A and the station B. A consumed electric energy 84 per traveling distance accumulated at the station B is set to one sample of the desired indexes created at step S202 used for regression analysis. In addition, a first threshold 86 and a second threshold 87 are set in an explanatory index A, and the explanatory index A is separated into three ranges, that is, a range 1 that is below the first threshold 86, a range 2 that is between the first threshold 86 and the second threshold 87, and a range 3 that is above the second threshold 87. In the regression analysis, ratios of time periods during which the explanatory index A exist in the respective ranges (ranges 1 to 3) relatively to the traveling time of the railway vehicle are set to explanatory indexes, and this time the range 1 of the explanatory index A is set to one sample of the explanatory indexes created at step S203. In regression analysis 82, the above indexes are extracted regarding plural combinations of two adjacent stations, and the regression analysis 82 is performed at step S204. Successively, a correlation coefficient between the range 1 of the explanatory index A and the consumed electric energy of the desired index is calculated and a regression coefficient is calculated from a regression line 83, and the correlation coefficient and the regression coefficient are output. Here, the execution of the regression analysis 82 can be done every time the railway vehicle stops at stations or can be done at predefined time intervals or at predefined traveling distances. Furthermore, a ratio and ranges used for dividing an explanatory variable can be set in advance. In addition, an explanatory index can be a composite explanatory index obtained by multiplying plural explanatory indexes together, and for example, it is conceivable that data analysis is performed by setting an explanatory index to a ratio of both range 1 of the explanatory index A and range 1 of an explanatory index B being satisfied.

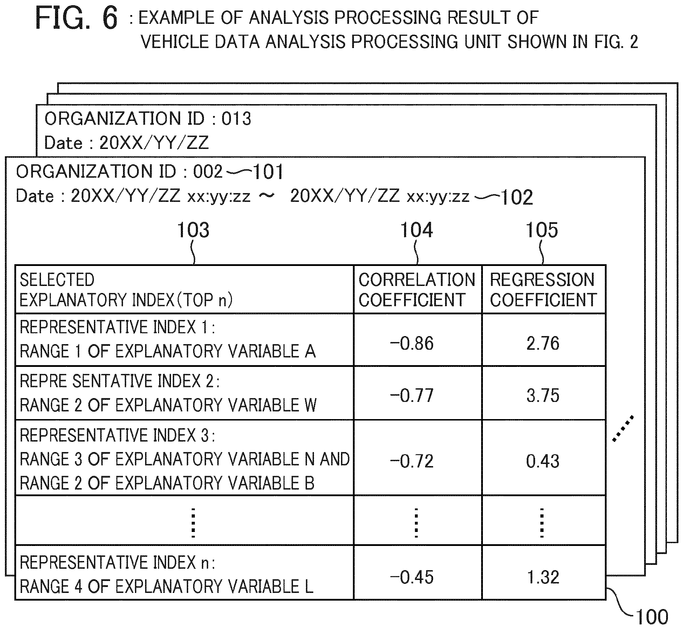

Next, an example of the representative indexes selected by the vehicle data analysis processing unit will be explained with reference to Fig. 6. In Fig. 6, a representative index 100 includes: an organization ID 101 that identifies the relevant railway vehicle; an analysis time period 102 of the representative index; explanatory indexes 103 that are selected as important indexes; correlation coefficients 104 corresponding to the respective explanatory indexes 103; and regression coefficients 105 corresponding to the respective explanatory indexes 103. The number of the explanatory indexes 103 has an upper limit number set in advance, and the explanatory indexes 103 are put in order on the basis of their correlation coefficients.

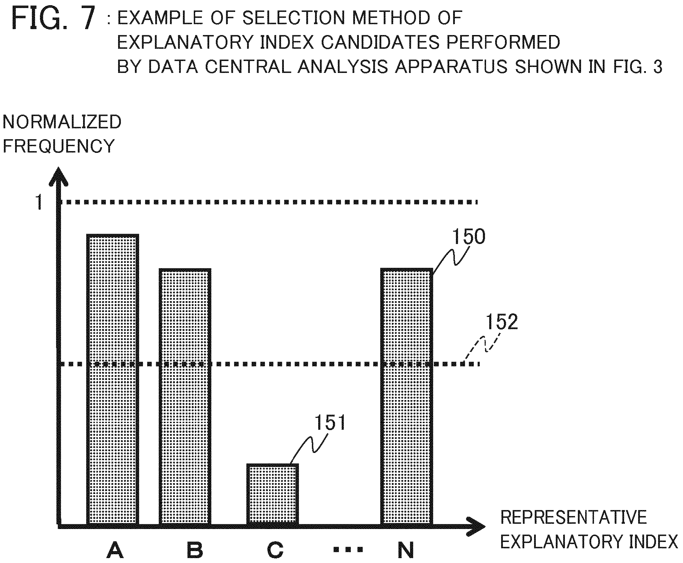

Next, an example of a selection method of explanatory index candidates performed by the data central analysis apparatus 2 will be explained with reference to Fig. 7. In Fig. 7, each of representative indexes gathered from the respective railway vehicles are normalized by the number of railway vehicles that are collection targets from which each of the representative indexes is collected. Explanatory indexes 150 applied to all the railway vehicles and explanatory indexes 151 applied to specified railway vehicles are judged on the basis of a normalized frequency threshold 152 that is set in advance. Representative explanatory indexes A, B, ···, N that exceed the threshold 152 are selected as candidates for an explanatory index 150 that is applied to all the railway vehicles, and representative explanatory indexes C, ··· that underrun the threshold 152 are selected as candidates for an explanatory index 151 that is applied to the specified railway vehicles.

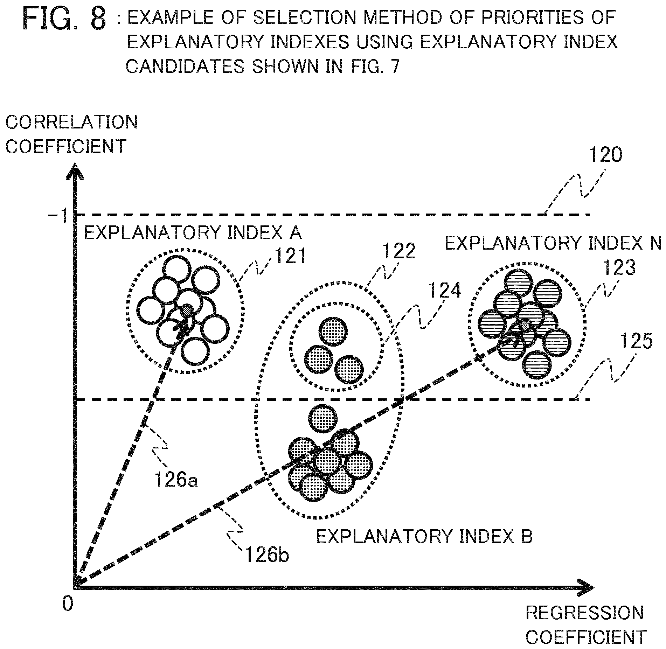

Next, an example of a method for selecting priorities of explanatory indexes performed by the data central analysis apparatus 2 will be explained with reference to Fig. 8. Fig. 8 shows relationships 120 between correlation coefficients and regression coefficients of the respective railway vehicles about explanatory indexes A121, B122, and N123 selected as explanatory index candidates to be applied to all the railway vehicles from representative indexes selected from the respective railway vehicles. The explanatory indexes A121 and the explanatory indexes N123 are selected as representative indexes in the respective railway vehicles, and their correlation coefficients are high. On the contrary, although the explanatory indexes B122 are selected in the respective railway vehicles as representative indexes, the correlation coefficients of the explanatory indexes B122 vary. In this case, explanatory indexes applied to the respective vehicles are selected among these explanatory indexes A121, B122, and N123 in the following way. First, a correlation coefficient threshold 125 is predefined in advance, and the numbers of the respective explanatory indexes the correlation coefficients of which exceed the predefined threshold 125 of correlation coefficient are extracted. Next, the ratios of the numbers of explanatory indexes exceeding the threshold 125 are calculated, and explanatory indexes the ratios of which exceeds a ratio threshold predefined in advance are set as targets. Here, just like an index group 124 of the explanatory indexes B122, if an index group includes a small number of selected indexes and the ratio of the number is smaller than the ratio threshold, the explanatory indexes included in the index group are not set as index targets. Furthermore, the priorities of the explanatory indexes exceeding the ratio threshold are determined on the basis of centroid distances 126a and 126b that are determined by the correlation coefficients and regression coefficients of the explanatory indexes. Here, the centroid distances 126a and 126b determined by the correlation coefficients and regression coefficients can be calculated by adding weights to the respective correlation coefficients and regression coefficients. In addition, the priorities of explanatory index candidates applied to the specified railway vehicles can also be determined by a similar method to the abovementioned method. Furthermore, in the case where the explanatory indexes applied to all the railway vehicles as well as the explanatory indexes applied to the specified railway vehicles are applied to a certain railway vehicle, the explanatory indexes applied to all the railway vehicles can be applied to the certain railway vehicle, and then the explanatory indexes applied to the specified railway vehicles can be applied to the certain railway vehicle, or the order of the abovementioned procedures can be reversed. Alternatively, priorities can be determined on the basis of the centroid distances determined by the correlation coefficients and regression coefficients of respective explanatory indexes.

As described above, according to this embodiment, it is possible that highly effective improvement measures for reducing consumed electric energies are extracted easily and in a short time for all railway vehicles that are moving bodies or for specified railway vehicles, and by feeding these improvement measures back to railway vehicles that need these improvement measures, the performances of the target railway vehicles can be improved.

### List of Reference Signs

1: Railway Vehicle
2: Data Central Analysis Apparatus
3: Vehicle Data Analysis Processing Unit
4: Vehicle Information Control Processing Unit
5: Support Information Setting Processing Unit
6: Data Transmission Processing Unit
7: Control Platform
9: Device Control Apparatus
10: Driver
21a: Signals such as Vehicle Driving Command Signal
22a: Signals such as Vehicle Driving Support Signal
23a: Signals such as Device Status Monitoring Signal
24a: Signals such as Device Status Changing Parameter Signal
25a: Vehicle Status Monitoring Signal
26a: Vehicle Data Analysis Result
27a: Vehicle Data Analysis Result
28a: Support Condition Information
29a: Support Condition Information
30a: Support Information
31a: Vehicle Data Analysis Result
32: Support Data
50: Analysis Sample Creation Processing Unit
51: Explanatory Index Creation Processing Unit
52: Desired Index Creation Processing Unit
53: Regression Analysis Processing Unit
54: Representative Index Selection Processing Unit
60a: Time History Signal of Vehicle Status Monitoring Signal
61a: Explanatory Index Signal
62a: Desired Index Signal
63a: Regression Analysis Result
70: Vehicle Data Reception Processing Unit
71: Representative Index Integration Processing Unit
72: Clustering Processing Unit
73: Judgment Processing Unit
74: Support Condition Setting Processing Unit
75: Data Transmission Processing Unit
80a: Vehicle Data Analysis Results of Respective Vehicles
81a: Integration Index Result
82a: Clustering Processing Result
83a: Judgment Result
84a: Support Condition Information
300: Railway Vehicle

## Claims

1. A data integration and analysis system configured to gather detection data (25a) that are detected by sensors for detecting the operation statuses of controlled devices mounted on a plurality of railway vehicles (1), and further configured to extract measures for improving the performances of the railway vehicles from the detection data,
wherein each of the plurality of railway vehicles (1) includes a vehicle data analysis processing unit (3) configured to perform correlation analysis between a plurality of desired indexes (62a) that show the performance of each of the plurality of railway vehicles and a plurality of explanatory indexes (61a) that show the statuses of the controlled devices generated from the detection data (25a), the desired indexes being set to the consumed electric energies of devices mounted on the relevant railway vehicle, the ride quality of the relevant railway vehicle, the reliability of the relevant railway vehicle, or a combination thereof, and the correlation analysis being performed by the vehicle data analysis processing unit every constant time interval, every constant traveling distance, or every traveling distance between any two adjacent railroad stations,
wherein the data integration and analysis system includes a data central analysis apparatus (2) configured to gather the correlation analysis result from the vehicle data analysis processing unit (3) included in each of the plurality of railway vehicles (1) and extract explanatory indexes that have the highest correlations with the desired indexes on the basis of the plurality of correlation analysis results, and
wherein the data central analysis apparatus (2) is configured to feed the extracted explanatory indexes back to the railway vehicles (1) as the measures for improving the performances of the railway vehicles.

2. The data integration and analysis system according to claim 1,
wherein the data central analysis apparatus (2) is configured to extract the explanatory indexes that are effective for the performance improvement of the respective railway vehicles (1) and simultaneously to classify the extracted explanatory indexes into explanatory indexes (150) that are effectively usable for all the railway vehicles and explanatory indexes (151) each of which is effectively usable for only specified railway vehicles of the plurality of railway vehicles (1).

3. The data integration and analysis system according to claim 1 or 2,
wherein the data analysis central apparatus (2) is prepared on the ground or on a specified railway vehicle of the plurality of railway vehicles (1).

## Patentansprüche

1. Datenintegrations- und -analysesystem, das ausgelegt ist, um Detektionsdaten (25a), die von Sensoren detektiert werden, zum Detektieren der Betriebszustände von gesteuerten Vorrichtungen zu sammeln, die auf einer Vielzahl von Schienenfahrzeugen (1) befestigt sind, und das ferner ausgelegt ist, um Maßnahmen zum Verbessern des Leistungsverhaltens der Schienenfahrzeuge aus den Detektionsdaten zu extrahieren,
wobei jedes aus der Vielzahl von Schienenfahrzeugen (1) eine Fahrzeugdaten-Analyseverarbeitungseinheit (3) umfasst, die ausgelegt ist, um eine Korrelationsanalyse zwischen einer Vielzahl von gewünschten Indizes (62a), die das Leistungsverhalten jedes aus der Vielzahl von Schienenfahrzeugen zeigen, und einer Vielzahl von erklärenden Indizes (61a), die die Zustände der gesteuerten Vorrichtungen zeigen, die aus den Detektionsdaten (25a) erstellt wurden, wobei die gewünschten Indizes auf die verbrauchten elektrischen Energien von Vorrichtungen, die auf dem betreffenden Schienenfahrzeug befestigt sind, die Fahrtqualität des betreffenden Schienenfahrzeugs, die Zuverlässigkeit des betreffenden Schienenfahrzeugs oder einer Kombination davon eingestellt sind, und wobei die Korrelationsanalyse durch die Fahrzeugdaten-Analyseverarbeitungsvorrichtung zu jedem konstanten Zeitintervall, zu jeder konstanten Fahrtdistanz oder zu jeder Fahrtdistanz zwischen zwei benachbarten Bahnhöfen durchgeführt wird,
wobei das Datenintegrations- und Analysesystem eine Datenzentralanalysevorrichtung (2) umfasst, die ausgelegt ist, um das Korrelationsanalyseergebnis von der Fahrzeugdaten-Analyseverarbeitungseinheit (3), die in jedem aus der Vielzahl von Schienenfahrzeugen (1) enthalten ist, zu sammeln und erklärende Indizes, die die höchsten Korrelationen mit den gewünschten Indizes basierend auf der Vielzahl von Korrelationsanalyseergebnissen aufweisen, zu extrahieren, und
wobei die Datenzentralanalysevorrichtung (2) ausgelegt ist, um die extrahierten erklärenden Indizes als die Maßnahmen zum Verbessern des Leistungsverhaltens der Schienenfahrzeuge wieder an die Schienenfahrzeuge (1) zurückzusenden.

2. Datenintegrations- und -analysesystem nach Anspruch 1,
wobei die Datenzentralanalysevorrichtung (2) ausgelegt ist, um die erklärenden Indizes, die zur Leistungsverhaltensverbesserung der entsprechenden Schienenfahrzeuge (1) geeignet sind, zu extrahieren und gleichzeitig die extrahierten erklärenden Indizes in erklärende Indizes (150), die für alle Schienenfahrzeuge geeignet verwendbar sind, und in erklärende Indizes (151) zu klassifizieren, von denen jeder nur für angegebene Schienenfahrzeuge aus der Vielzahl von Schienenfahrzeugen (1) geeignet verwendbar ist.

3. Datenintegrations- und -analysesystem nach Anspruch 1 oder 2,
wobei die Datenanalysezentralvorrichtung (2) auf dem Boden oder auf einem angegebenen Schienenfahrzeug aus der Vielzahl von Schienenfahrzeugen (1) vorbereitet wird.

## Revendications

1. Système d'intégration et d'analyse de données configuré pour collecter des données de détection (25a) qui sont détectées par des capteurs pour détecter les états de fonctionnement de dispositifs commandés montés sur une pluralité de véhicules ferroviaires (1), et en outre configuré pour extraire des mesures pour améliorer les performances des véhicules ferroviaires à partir des données de détection.
dans lequel chacun de la pluralité de véhicules ferroviaires (1) inclut une unité de traitement d'analyse de données de véhicule (3) configurée pour effectuer une analyse de corrélation entre une pluralité d'indices souhaités (62a) qui montrent les performances de chacun de la pluralité de véhicules ferroviaires et une pluralité d'indices explicatifs (61a) qui montrent les états des dispositifs commandés générés à partir des données de détection (25a), les indices souhaités étant définis pour les énergies électriques consommées de dispositifs montés sur le véhicule ferroviaire concerné, la qualité de roulement du véhicule ferroviaire concerné, la fiabilité du véhicule ferroviaire concerné ou une combinaison de ceux-ci, et l'analyse de corrélation étant effectuée par l'unité de traitement d'analyse de données de véhicule à chaque intervalle de temps constant, à chaque distance de déplacement constante ou à chaque distance de déplacement entre deux gares ferroviaires adjacentes,
dans lequel le système d'intégration et d'analyse de données inclut un appareil d'analyse centrale de données (2) configuré pour collecter le résultat d'analyse de corrélation à partir de l'unité de traitement d'analyse de données de véhicule (3) incluse dans chacun de la pluralité de véhicules ferroviaires (1) et extraire des indices explicatifs qui ont les corrélations les plus élevées avec les indices souhaités sur la base de la pluralité de résultats d'analyse de corrélation, et
dans lequel l'appareil d'analyse centrale de données (2) est configuré pour renvoyer les indices explicatifs extraits aux véhicules ferroviaires (1) en tant que mesures pour améliorer les performances des véhicules ferroviaires.

2. Système d'intégration et d'analyse de données selon la revendication 1,
dans lequel l'appareil d'analyse centrale de données (2) est configuré pour extraire les indices explicatifs qui sont efficaces pour l'amélioration des performances des véhicules ferroviaires respectifs (1) et simultanément pour classer les indices explicatifs extraits en indices explicatifs (150) qui sont effectivement utilisables pour tous les véhicules ferroviaires et en indices explicatifs (151) dont chacun est effectivement utilisable pour seulement des véhicules ferroviaires spécifiés de la pluralité de véhicules ferroviaires (1).

3. Système d'intégration et d'analyse de données selon la revendication 1 ou 2,
dans lequel l'appareil central d'analyse de données (2) est préparé au sol ou sur un véhicule ferroviaire spécifié de la pluralité de véhicules ferroviaires (1).
